# NOUVEAU FASCICULE DE BREVET EUROPEEN

(11) **EP 0 598 091 B2**
(45) Date de publication et mention de la décision concernant l'opposition: **13.08.2003**
(45) Mention de la délivrance du brevet: 24.09.1997
(21) Numéro de dépôt: 93913095.1
(22) Date de dépôt: 04.06.1993
(51) Int. Cl.: C08F 2/24

(54) **NANOPARTICULES DE POLYMERES FONCTIONNALISEES, LEUR PROCEDE DE PREPARATION ET LEUR UTILISATION**
NANOPARTIKELN VON FUNKTIONALISIERTEN POLYMEREN, DEREN VERFAHREN ZUR HERSTELLUNG UND DEREN VERWENDUNG
FUNCTIONALIZED POLYMER NANOPARTICLES, METHOD OF PREPARATION AND USE THEREOF

(30) Priorité: 04.06.1992 FR 9206759
(43) Date de publication de la demande: 25.05.1994
(73) Titulaire: SOCIETE PROLABO, 94120 Fontenay-sous-Bois (FR)
(72) Inventeur: LARPENT, Chantal, 78000 Versailles (FR); RICHARD, Jo, Résidence Mermoz - Bat. G, F-60500 Chantilly (FR); VASLIN-REIMANN, Sophie, F-94360 Bry-sur-Marne (FR)
(74) Mandataire: Ahner, Francis
(86) Numéro de dépôt international: FR9300539
(87) Numéro de publication internationale: WO93024534

(56) Documents cités:
- EP-A- 0 156 971
- EP-A- 0 214 626
- EP-A- 0 389 179
- EP-A- 0 391 343
- EP-A- 0 429 207
- DE-A- 1 495 913
- DE-A- 2 556 327
- US-A- 3 986 994

## Description

La présente invention a pour objet un procédé de préparation des particules de polymères de taille de l'ordre de la dizaine de nanomètres et présentant à leur surface des groupements ionogènes ou réactifs.

Les dispersions aqueuses de particules de polymères plus communément nommées latex, sont traditionnellement utilisées dans l'industrie des peintures, des adhésifs, du papier et du textile.

Ces dispersions sont classiquement obtenues par polymérisation en émulsion, cette technique permettant de préparer des particules de taille contrôlée et généralement supérieure à 0,1 micron. Ces qualités leur confèrent une grande surface spécifique qui peut être exploitée avantageusement dans toute application prenant en compte l'aspect particulaire de latex.

Récemment, l'utilisation des latex s'est étendue au domaine biomédical et plus particulièrement dans les dosages immunologiques comme les diagnostics, l'adsorption des protéines et l'immobilisation d'enzymes. Dans ce type d'application, les particules de latex présentent classiquement à leur surface des groupements réactifs susceptibles d'être impliqués dans des réactions de couplage avec des molécules biologiques, comme les anticorps par exemple.

Aujourd'hui, de nombreux travaux sont en cours pour accroître la performance et plus précisément la sensibilité de détection de ces techniques de dosages biologiques. La taille des particules impliquées dans les dosages immunologiques est à l'évidence un des facteurs conditionnant leur seuil de sensibilité.

Par exemple, dans les dosages optiques comme la néphélométrie, qui consiste à détecter la lumière diffusée par les particules agrégées, via la formation de complexes anticorps-antigène, à une certaine longueur d'onde et à un angle de mesure donné, l'intensité de la lumière diffusée par une suspension de particules donnée, dépend du nombre et de la taille de ces particules. Plus la taille des centres diffusants de départ sera faible et plus leur concentration pourra être élevée pour une même intensité diffusée. Dans le cas extrême des particules de diamètre très faible, de l'ordre de 20nm, leur intensité diffusée peut être même négligeable. Dès que la réaction immunologique démarre et donc que les particules s'associent sous forme de doublets, triplets, etc..., la lumière est diffusée de manière significative, ce qui permet la quantification de la réaction.

L'objet de la présente est précisément de mettre au point un procédé de préparation de particules de latex possédant une taille plus réduite c'est à dire de l'ordre d'une dizaine de naomètres et qui soient appropriées à un emploi dans les dosages biologiques.

Compte-tenu de l'application visée, il est clair que ces même particules de polymères doivent en outre posséder une granulométrie resserrée pour obtenir une sensibilité de détection élevée et présenter à leur surface des groupements réactifs vis à vis des molécules biologiques à doser.

L'obtention simultanée de ces trois caractéristiques est particulièrement délicate, car elle nécessite la mise en oeuvre de monomètres fonctionnels polaires, partiellement solubles dans l'eau, et qui de plus en plus ont tendance à polymériser en phase aqueuse ; ceci peut conduire à une déstabilisation de la dispersion, ce qui résulte en une augmentation de la taille moyenne des particules par coalescence et à un élargissement important de la distribution granulométrique.

Le problème, posé et résolu selon l'invention, est donc la mise au point d'un nouveau procédé de préparation de ce type de particules de latex répondant simultanément à trois impératifs, taille réduite, granulométrie ressérrée et fonctionnalisation.

La présente invention se rapporte à un procédé de préparation d'une dispersion aqueuse de nanoparticules de polymère contenant de 1 à 25 % de son poids en rianoparticules, exprimé en extrait sec du polymère constituant lesdites particules, lesdites nanoparticules de polymère possédant une distribution granulométrique resserrée, une taille comprise entre 10 et 50 nanomètres et présentant à leurs surfaces des groupements ionogènes ou réactifs, identiques ou différents choisis parmi OH, SO₃H, SO₃R, SO₄R, COOH, CHO, PhCH₂CI, NH₂, NR₂, NR₃ avec R étant un radical alkyle en C₁ à C₃, CONH₂, NH-NH₂, CN, CO₂ (CH₂)ₙOH avec n représentant un entier compris entre 1 et 8 ainsi que les esters de N-hydroxyimide, caractérisé en ce qu'il met en oeuvre la polymérisation d'une microémulsion directe de type huile-dans-l'eau et la récupération de la dispersion aqueuse à l'issue de la polymérisation, ladite microémulsion directe de type huile-dans-l'eau étant obtenue au préalable par titration, à l'aide d'une quantité efficace d'un co-tensioactif copolymérisable ou non, d'une émulsion directe de type huile-dans-l'eau qui contient en dispersion aqueuse un ou plusieurs monomères de type vinylique, acrylique, vinylaromatique, en particulier des esters vinyliques, des alkylesters d'acides α,β-insaturés, des esters d'acides carboxyliques insaturés, le chlorure de vinyle, le chlorure de vinylidène et/ou de diènes.

Parmi les polymères pouvant constituer lesdites particules on peut citer les homopolymères ou les copolymères contenant des motifs dérivés des monomères vinyliques, acryliques, vinylaromatiques, d'esters vinyliques, d'alkylesters d'acides α et β insaturés, d'esters d'acides carboxyliques insaturés, de chlorure de vinyle, de chlorure de vinyldène et/ou de diènes.

A titre illustratif, on peut plus particulièrement mentionner les monomères suivants :
- Le styrène et ses dérivés (vinyltoluène, éthylvinylbenzène)
- Les esters, hydroxyesters et amides de l'acide (méth)-acrylique tels que le méthacrylate de méthyle, l'acrylate de butyle, (méth)-acrylamide,
- Les esters vinyliques (acétate de vinyle, propionate de vinyle),
- Les chlorures de vinyle et vinylidène,
- les vinylpyridines (2-vinylpyridine, 4-vinylpiridine, 2-méthyl, 5-vinylpyridine)
- Les di (éthyl) amino-alkyl(méth)-acrylates
- Les di (éthyl) amino-alkyl (méth)-acrylamides...
- L'allylamine
- L'éthylène imine
- Le (méth)-acrylonitrile
- Le N-vinylimidazole
- Les dialkylaminométhyl-styrènes
- La vinylpyrrolidone
- Le divinylbenzène et ses dérivés
- Les diènes conjugués (butadiène...)
- Les dérivés polyallyliques (tétraallyléthylène...)
- Les (méth) acrylates de polyols (diméthracrylate d'éthylène glycol...)
- Le méthylène-bis (acrylamide)
- L'acide-bis(acrylamido)acétique

A titre de monomères vinyliques et acryliques convenant à l'invention, on peut plus particulièrement citer ceux dérivant du styrène, de l'acide acrylique, d'ester acrylique de type esters acryliques de N-hydroxysuccinimide comme le N-acryloyloxysuccinimide et le N-acryloyloxyphtalimide, l'acide méthacrylique, le maléate de monobenzyle, la 2-vinylpyridine, le méthylsulfonate de styrène, le chlorométhylstyrène, l'hydroxypropylméthacrylate, l'hydroxybutylacrylate, l'hydroxyéthylacrylate, l'acrylonitrite et/ou l'acroléine.

Les groupements ionogènes ou réactifs, présents à la surface des particules, sont plus particulièrement ceux mentionnés précédemment, à titre de substituants des monomères, dont dérivent les polymères constituant les nanoparticules.

Il s'agit de préférence de groupements choisis parmi OH, SO₃H, SO₃R, SO₄R, COOH, CHO,PhCH₂Cl, NH₂, NR₂, NR₃ avec R étant un radical alkyle en C₁C₃, CONH₂, NH-NH₂, CN, CO₂(CH₂)nOH avec n représentant un entier compris entre 1 et 8, ainsi que les esters de N-hydroxyimide.

Les fonctions, présentes à la surface des nanoparticules, peuvent également dériver de la transformation chimique ultérieure, par exemple par substitution nucléophile, d'un ou plusieurs groupements réactifs portés par la chaîne polymérique constituant les nanoparticules.

Selon un aspect préféré de l'invention, le polymère constituant les nanoparticules présente une température de transition vitreuse Tg supérieure à environ 20°C.

Les nanoparticules obtenues selon le procédé de l'invention possèdent une distribution granulométrique resserrée. Cette monodispersité en taille permet d'accéder à la surface exacte d'adsorption des nanoparticules et par conséquent à la capacité de fixation optimale de celles-ci dans les dosages immunologiques.

On considère comme resserrée toute distribution granulométrique dont l'écart-type est inférieur ou égal à 30%, et de préférence de l'ordre de 20%; ceci signifie que les 2/3 en poids des particules ont un diamètre compris entre dmσ et dₘ+σ(dₘ : diamètre moyen, σ : écart-type), dans le cas d'une distribution du type de Gauss.

Le procédé selon l'invention permet d'obtenir des nanoparticules par polymérisation d'une microémulsion directe du ou des monomères correspondants. Par le terme microémulsion, on entend désigner une dispersion thermodynamiquement stable par opposition à une dispersion seulement cinétiquement stable qui au terme d'un certain délai coalesce.

Il s'agit de dispersions aqueuses contenant environ 1 à 25% et plus particulièrement entre environ 5 et 20% de leur poids en nanoparticules exprimé en extrait sec du polymère constituant les dites particules.

Le procédé selon l'invention met en oeuvre la polymérisation d'une microémulsion directe et la récupération de ladite dispersion aqueuse à l'issue de la polymérisation, ladite microémulsion directe étant obtenue au préalable par titration à l'aide d'une quantité efficace d'un tensio-actif ionique d'une émulsion directe stabilisée par au moins un tensio-actif ionique l'émulsion, dite émulsion initiale, étant constituée d'au moins un monomère en dispersion aqueuse.

La dispersion aqueuse de nanoparticules ainsi obtenue peut en outre subir, le cas échéant, une opération de purification.

Le procédé implique donc, dans une première étape, la formation de cette microémulsion directe.

Selon cette méthode, le ou les monomères sont dispersés dans une phase aqueuse de manière à obtenir une émulsion directe contenant en outre à titre de stabilisant une quantité efficace d'au moins un émulsifiant ionique. Les pourcentages pondéraux huile/eau sont de préférence de l'ordre de 5% à 6%. Cette émulsion est ensuite titrée par addition d'un co-tensio-actif, copolymérisable ou non, jusqu'à l'obtention d'une microémulsion directe translucide de type huile dans eau, stable et de faible viscosité.

Il est entendu que le co-tensio-actif doit être sélectionné pour sa capacité à formuler une microémulsion à partir de l'émulsion directe et également son aptitude à comicelliser avec l'émulsifiant ionique.

A titre de co-tensio-actif non copolymérisable possible, on peut en particulier mentionner les alcools aliphatiques en C2 à C8 linéaires ou ramifiés et de préférence ceux dérivés du butanol ou pentanol et comme surfactant copolymérisable les dérivés hydroxyalkylacrylates et hydroxyalkylméthacrylates en C2 à C8.

A titre d'émulsifiant ionique, on peut utiliser notamment le bromure de cétyltriméthyl ammonium, le dodécysulfate de sodium ou le dodécylbenzènesulfonate de sodium.

Les quantités d'émulsifiant mises en oeuvre sont nettement inférieures et d'autre part la nature de ces émulsifiants ne soulève pas de problèmes consécutifs d'élimination. Les alcools de type pentanol sont comparativement aux nonylphénolpolyéthoxylés, très aisément éliminés par dialyse.

En outre, dans le cas particulier des hydroxyalkylacrylates ou méthacrylates, le problème d'élimination ne se pose plus puisque cet émulsifiant est incorporé par copolymérisation dans la structure du polymère, constituant la formulation des nanoparticules. Dans ce cas, seul l'émulsifiant ionique demeure présent dans la microémulsion.

Par ailleurs, en choisissant à titre d'émulsifiant ionique, un surfactant cationique comme le bromure de cétyl-triméthyl-ammonium (CTAB) ou un surfactant anionique comme le laurysulfate de sodium (SDS) on s'affranchit définitivement de toute technique de purification ultérieure puisque le CTAB et le SDS précipitent à la fin de la polymérisation respectivement à température ambiante et à une température inférieure à 15°C et peuvent donc être aisément éliminés par simple centrifugation ou filtration.

Un intérêt supplémentaire de cette voie d'accès aux microlatex, est de pouvoir accéder directement à la microémulsion. Lorsque les formulations ont été établies, les microémulsions peuvent être préparées par mélange direct de l'ensemble des constituants. Cette facilité de mise en oeuvre est particulièrement intéressante sur un plan industriel.

De manière générale, les nanoparticules selon l'invention possèdent une teneur en émulsifiant inférieure à environ 3%.

La préparation des microémulsions est de préférence réalisée à une température voisine de la température ambiante et toujours inférieure à la température de rupture de l'émulsion de départ, typiquement de l'ordre de 40°C.

La taille des particules de cette microémulsion est de l'ordre de 5 à 8 nm.

La polymérisation ultérieure de ces microémulsions à l'aide d'initiateurs appropriés et dans des conditions non déstructurantes, permet d'obtenir des latex, dont la taille des particules est inférieure à 50 nm et dont la distribution granulométrique est étroite.

En ce qui concerne cette étape de polymérisation des microémulsions, la faisabilité a été établie aussi bien avec des initiateurs hydrosolubles qu'organosolubles, utilisables à basse températures, de préférence inférieures ou égales à 40°C. Il s'agit soit de couples redox (persulfate/diamine, eau oxygénée/acide ascorbique), soit de l'AIBN ou d'un de ces dérivés hydrosolubles ou le DMPA (diméthoxyacétophénone), tous décomposables photochimiquement (irradiation UV). Suivant la nature du système initiateur et la température de réaction, le temps de polymérisation est typiquement compris entre 1 et 3 heures. Ces techniques de polymérisation dites thermiques, photochimiques ou chimiques étant très familières à l'homme de l'art, elles ne seront pas décrites ici en détail.

Les réactions d'homo- ou de co-polymérisation conduisent à des particules possédant une distribution granulométrique resserrée et une taille de l'ordre de 10 à 50 nm. Elles peuvent être filmogènes ou non.

Les monomères pouvant être mis en oeuvre pour la préparation des nanoparticules sont ceux déjà cités précédemment.

Les nanoparticules obtenues selon le procédé de l'invention peuvent avantageusement être utilisées dans les méthodes de dosage biologiques pour fixer ou immobiliser des substances biologiquement actives (protéines telles anticorps, enzymes..., antigènes, médicaments...) par adsoption ou couplage.

La réaction de couplage peut être réalisée selon des méthodes bien connues, par exemple :
- en faisant appel à des agents de couplage (tels que glutaraldehyde, carbodiimide hydrosoluble, N-hydroxybenzotriazole, spacers du type 1-6 diaminohexane, polysaccharide...)
- par activation des fonctions du polymère (par exemple par diazotation, par action du bromure de cyanogène, du chlorure de tosyle...) puis réaction avec la molécule à fixer.
- par réaction directe des fonctions du polymère comme par exemple les groupements esters acrylique activés de N-hydroxysuccinimide avec des dérivés aminés (enzyme, aminoacide, aminosucre, etc...) dans la suspension à pH proche de la neutralité.
- par réaction de substitution nucléophile sur les groupements chlorométhyle de surface toujours directement sur la suspension à pH neutre pour les nucléophiles anioniques (sulfite, thiocyanate, etc...) ou à pH basique pour les amines (amines primaires, aminoacides, aminoalcools, diamines).
- etc...

Ces nanoparticules peuvent également être utilisées à titre de support dans les tests de diagnostics (agglutination "RIA" radioimmunological assay- "IRMA" immunoradiometric assay - "EIA" enzyme immuno assay - "ELISA" enzyme linked immunosorbent assay), comme catalyseur enzymatique en biotechnologie ou comme support de culture cellulaire.

Bien entendu compte tenu de leur taille très réduite, les nanoparticules et les dispersions aqueuses correspondantes sont également susceptibles d'être employées avantageusement dans des domaines plus industriels, de type industrie de revêtement comme la peinture, l'encollage, le textile, le papier...

La présente invention vise toute application des nanoparticules obtenues par le procédé revendiqué, dont plus particulièrement celles dans les domaines biologique et médical dont les méthodes de dosages biologiques.

Les exemples présentés ci-après permettront de mettre en évidence d'autres avantages et caractéristiques de la présente invention sans toutefois en limiter la portée.

Les latex obtenus dans les exemples ci-après ont été caractérisés du point de vue granulométrie, soit par PCS ("Photon Correlation Spectroscopy": diffusion quasi-élastique de la lumière), soit par MET (Microscopie Electronique à Transmission), et du point de vue détermination des fonctions de surface, par dosage conductimétrique des fonctions superficielles dans le cas des groupements acides ou par dosage UV dans les cas des fonctions imides. Certains d'entre eux ont été également caractérisés par spectroscopie Infrarouge et R. M.N. lorsque leur solubilité le permet et par analyse élémentaire pour les copolymères contenant par exemple des halogènes.

### EXEMPLE 1:

### Préparation d'une dispersion aqueuse de nanoparticules filmogènes, fonctionnalisées par des groupements hydroxylés.

Une microémulsion aqueuse d'hydroyéthylacrylate et de styrène est préparée comme suit :

On solubilise dans un bécherde 250 ml et muni d'un système d'agitation mécanique, 2,5 g de bromure de cétyl-triméthyl-ammonium (CTAB) dans 7,6 g d'hydroxyéthylacrylate. A la solution ainsi obtenue, on ajoute sous agitation 2,3 g de styrène. La microémulsion est ensuite formée sous agitation par incorporation de 87,6 g d'eau au mélange.

Cette microémulsion est ensuite introduite dans un ballon tricol de 250 ml, équipé d'un système d'agitation et d'une arrivée d'azote. Elle est désaérée pendant 20 minutes sous azote, puis maintenue sous atmosphère inerte. Elle est placée sous agitation dans un bain de glace à 0°C.82 mg de persulfate d'ammonium dans 1 ml d'eau sont ensuite ajoutés à l'aide d'une seringue, puis 107 mg de tétraméthyldiaminoéthane (TMDAM). Au bout de deux heures, la circulation d'azote est arrêtée et la réaction se poursuit à température ambiante pendant 4 heures. On observe une précipitation du CTAB qui est éliminé de la microémulsion polymérisée par centrifugation. On obtient une dispersion aqueuse de nanoparticules contenant 10% en poids de solide.

### Caractérisation des particules :

La taille des particules est déterminée par PCS. Elle est de 50nm ± 15nm. Les particules présentent une distribution resserrée.
Après déshydratation à 35°C pendant trois heures sur une plaque de verre ou de polystyrène, les particules forment un film de polymère homogène.

### EXEMPLE 2:

### Préparation d'une dispersion aqueuse de nanoparticules non filmogène, fonctionnalisées par des groupements hydroxylés.

Pour préparer la microémulsion aqueuse on dissout au préalable sous agitation dans un bécher de 250 ml, 9,3 g de sodium dodécylsulfate (SDS) dans 84,75 ml d'eau. 3,39 g de styrène sont ajoutés. Après agitation de l'ensemble, une émulsion blanche, laiteuse apparait. On lui ajoute, à la burette, en maintenant l'agitation, 2,54 g d'hydroxylbutylacrylate. La solution finale est translucide.

La microémulsion ainsi obtenue est ensuite polymérisée selon le protocole décrit en exemple 1. On obtient une dispersion aqueuse de nanoparticules contenant 15,2% en poids de charges solides.

### Caractérisation des particules

La taille des particules, déterminée par PCS, est de 20nm ± 5 nm.

### Purification du latex par dialyse

Le latex est dialysé d'une façon statique à travers une membrane de diamètre de pores compris entre 1,5 et 3 nm (tubes à dialyse Visking®commercialisés par la société ROTH), qui permet l'échange avec de l'eau désionisée pendant plusieurs jours. Il est possible d'éliminer 95% du sodium dodécylsulfate par cette méthode, tout en gardant un latex parfaitement stable.

### EXEMPLE 3:

### Préparation d'une dispersion aqueuse de particules fonctionnalisées par des groupements hydroxylés, facilement purifiable par cristallisation.

La mode opératoire est analogue à celui de l'exemple 2. La nature des composés mis en oeuvre et leurs quantités respectives sont comme suit :

### Solution S₁:

| | |
|---|---|
| Styrène | 3,37 g |
| SDS | 9,27 g |
| H2O | 84,23 g |

### Solution S2:

HPMA (hydroxy propyl méthacrylate) : 3,14

La microémulsion ainsi obtenue est ensuite polymérisée selon le protocole décrit en exemple 1.
On obtient une dispersion aqueuse de nanoparticules contenant 15,7 % en poids de charges solides.

### Purification du latex par cristallisation du sodium dodécylsulfate (SDS)

La température critique de micellisation (point de Kraft) du SDS étant relativement élevée (16°C), il est possible de l'éliminer simplement par filtration après cristallisation à froid. Ainsi, ce traitement permet l'élimination, après deux cycles de refroidissement/filtration, de 72 % du SDS initialement présent, sans déstabiliser la suspension de nanoparticules.
Cette méthode de purification peut ensuite être complétée par une dialyse du latex, qui compte-tenu de la faible concentration résiduelle en SDS, va être rapide (24 h).

### EXEMPLE 4:

### Préparation d'une dispersion aqueuse de particules non filmogènes, fonctionnalisées par des groupements hydroxylés.

De la même façon qu'en exemple 1, on solubilise dans un bécher de 250 ml et muni d'un système d'agitation, 1g de bromure de cétyl-triméthyl-ammonium (CTAB) dans 3,2 g d'hydroxyléthylacrate. On y ajoute 6,9 g de styrène puis 88,9 g d'eau sous agitation.

La microémulsion, ainsi obtenue, est introduite dans un ballon tricol de 250 ml, équipé d'un système d'agitation et d'une arrivée d'azote. Elle est désaérée pendant 20 mn sous azote, puis maintenue sous agitation et dans un bain de glace à 0°C, sous atmosphère inerte. 82 mg de persulfate d'ammonium dilué dans un 1 ml d'eau sont ajoutés à l'aide d'une seringue, puis 107 mg de tétraméthyldiaminoéthane (TMDAM). Au bout de 2 heures, la circulation d'azote est arrêtée et la réaction est laissée se poursuivre à température ambiante environ 4 heures. On observe une précipitation du CTAB qui est éliminé par centrifugation. La dispersion aqueuse de nanoparticules contient 10% en poids de charge solide.

### Caractérisation des particules :

La taille des particules, déterminée par PCS, est de 25 nm ± 7 nm. Elles présentent une distribution resserrée.

### EXEMPLE 5 (Comparatif)

### Préparation d'une dispersion aqueuse de nanoparticules, facilement purifiable par dialyse.

### Préparation de la microémulsion (huile dans l'eau)

On dissout dans un bêcher de 250 ml, muni d'un système d'agitation et surmonté d'une burette, 8,3 g de SDS dans 75,7 g d'eau.

Après homogénisation, 8,9 g de styrène sont ajoutés au mélange sous agitation.

La titration de l'émulsion est réalisée à l'aide de 7,1 g de pentanol-1, qui est ajouté goutte à goutte, sous l'agitation, au contenu du bécher.
Le mélange réactionnel, qui est laiteux à l'origine, passe par une phase gel et s'éclaircit progressivement pour conduire finalement à une solution translucide. La polymérisation s'effectue selon le protocole décrit précédemment en exemple 4.

### Caractérisation des particules

Concentration du latex : 17,1%

Distribution de taille des particules, déterminée par PCS : 20nm ± 6nm Distribution resserrée.

### Purification du latex par dialyse

Le latex est dialysé comme dans l'exemple précédent. L'élimination du cotensioactif (pentanol-1) est totale après 20 H; celle du tensio-actif (SDS) intervient après 48 H.

97% du système émulsifiant est ainsi éliminé par cette méthode, ce qui ne modifie en rien la stabilité du latex.

### Exemple 6:

### Réaction de surface sur des nanoparticules fonctionnalisées par des groupements chlorométhyle.

Dans le but d'obtenir des nanoparticules fonctionnalisées, une réaction de substitution nucléophile sur les groupements chlorométhyle d'un copolymère styrène / VCB (chlorure de vinylbenzyle) a été réalisée :

### Substitution nucléophile:

La réaction de substitution nucléophile est effectuée directement sur le latex chlorométhylé, non dialysé auquel est additionné 7,3 g de nucléophile, la L-alanine. La réaction se fait dans un ballon de 11, sous une légère agitation mécanique à 30°C pendant 48 heure en milieu basique (pH10). Le pH est ajusté au moyen de quelques gouttes de NaOH 0,1 M.

### Caractérisation du nanolatex:

Le taux de substitution est évalué par analyse élémentaire après floculation des polymères et élimination des tensio-actifs par plusieurs lavages à reflux dans l'eau.

Le taux de substitution est de 40 % dans le cas présent.

La taille des particules, déterminée par PCS et MET est de 32 nm ± 6 mn.

## Revendications

1. Procédé de préparation d'une dispersion aqueuse de nanoparticules de polymère contenant de 1 à 25 % de son poids en nanoparticules, exprimé en extrait sec du polymère constituant lesdites particules, lesdites nanoparticules de polymère possédant une distribution granulométrique resserrée, une taille comprise entre 10 et 50 nanomètres et présentant à leurs surfaces des groupements ionogènes ou réactifs, identiques ou différents choisis parmi OH, SO₃H, SO₃R, SO₄R, COOH, CHO, PhCH₂CI, NH₂, NR₂, NR₃ avec R étant un radical alkyle en C₁ à C₃, CONH₂, NH-NH₂, CN, CO₂ (CH₂)ₙOH avec n représentant un entier compris entre 1 et 8 ainsi que les esters de N-hydroxyimide, **caractérisé en ce qu'**il met en oeuvre la polymérisation d'une microémulsion directe de type huile-dans-l'eau et la récupération de la dispersion aqueuse à l'issue de la polymérisation, ladite microémulsion directe de type huile-dans-l'eau étant obtenue au préalable par titration, à l'aide d'une quantité efficace d'un co-tensioactif copolymérisable ou non, d'une émulsion directe de type huile-dans-l'eau qui contient en dispersion aqueuse un ou plusieurs monomères de type vinylique, acrylique, vinylaromatique, en particulier des esters vinyliques, des alkylesters d'acides α,β-insaturés, des esters d'acides carboxyliques insaturés, le chlorure de vinyle, le chlorure de vinylidène et/ou de diènes.

2. Procédé selon la revendication 1, **caractérisé en ce que** le co-tensioactif non copolymérisable est un alcool aliphatique linéaire ou ramifié en C₂ à C₈,de préférence les alcools dérivés du butanol ou pentanol.

3. Procédé selon la revendication 1, **caractérisé en ce que** le surfactant copolymérisable est un hydroxyalkylacrylate ou hydroxyalkylméthacrylate en C₂ à C₈, de préférence l'hydroxypropylméthacrylate.

4. Procédé selon l'une des revendications 1 à 3, **caractérisé en ce que** le cotensioactif est ajouté à l'émulsion jusqu'à l'obtention d'une microémulsion directe stable et translucide.

5. Procédé selon l'une des revendications 1 à 4, **caractérisé en ce que** le ou les monomère(s) présent(s) dans l'émulsion initiale sont choisis pour obtenir des nanoparticules de polymères contenant des motifs dérivés de l'homopolymérisation ou copolymérisation du styrène, de l'acide acrylique, un ester acrylique de type ester acrylique de N-hydroxysuccinimide comme le N-acryloyloxysuccinimide et le N-acryloyloxyphtalimide, l'acide méthacrylique, le maléate de monobenzyle, la 2-vinylpyridine, le méthylsulfonate de styrène, le chlorométhylstyrène, l'hydroxyéthylacrylate, l'hydroxypropylméthacrylate, l'hydroxybutylacrylate, l'acrylonitrile et/ou l'acroléine.

6. Procédé selon l'une des revendications 1 à 5, **caractérisé en ce que** la polymérisation de la microémulsion directe est réalisée photochimiquement, chimiquement ou thermiquement à l'aide d'un initiateur hydrosoluble ou organosoluble approprié.

7. Procédé selon la revendication 6, **caractérisé en ce que** l'initiateur est de préférence un couple redox de type persulfate/diamine, eau oxygénée/acide ascorbique, I'AIBN ou un des dérivés hydrosolubles de celui-ci.

8. Procédé selon l'une des revendications 1 à 7, **caractérisé en ce que** l'on prépare une dispersion aqueuse de nanoparticules présentant un taux en émulsifiant inférieur à environ 3 %.

9. Procédé selon l'une des revendications 1 à 8, **caractérisé en ce que** la dispersion aqueuse de nanoparticules subit après sa récupération une opération de purification.

## Patentansprüche

1. Verfahren zur Herstellung einer wässrigen Dispersion von Polymer-Nanopartikeln mit einem Polymergehalt von 1 bis 25 % ihres Gewichts an Nanopartikeln, ausgedrückt als Trockenextrakt des die Partikel bildenden Polymeren, wobei die Polymer-Nanopartikel eine enge granulometrische Verteilung und eine Größe von 10 bis 50 Nanometer aufweisen und an ihrer Oberfläche ionogene oder reaktive Gruppen, die gleich oder verschieden sein können, ausgewählt aus OH, SO₃H, SO₃R, SO₄R, COOH, CHO, PhCH₂Cl, NH₂, NR₂, NR₃, wobei R ein Alkylrest mit C₁ bis C₃ ist, CONH₂, NH-NH₂, CN, CO₂(CH₂)nOH, wobei n eine ganze Zahl von 1 bis 8 darstellt, sowie den Estern von N-Hydroxyimid aufweisen, **dadurch gekennzeichnet, dass** man eine direkte Mikroemulsion vom Öl-in-Wasser-Typ polymerisiert und die wässrige Dispersion nach Ablauf der Polymerisation gewinnt, wobei die direkte Mikroemulsion vom Öl-in-Wasser-Typ am Anfang durch Titration mit Hilfe einer wirksamen Menge eines copolymerisierbaren oder nicht-copolymerisierbaren Co-Tensids, erhalten wird aus einer direkten Emulsion des Öl-in-Wasser-Typs, die eine wässrige Dispersion eines oder mehrerer Monomerer vom Vinyl-, Acryl-, vinylaromatischen Typ und insbesondere von Vinylestern, Alkylestern von α,β-ungesättigten Säuren, Estern von ungesättigten Carbonsäuren, Vinylchlorid, Vinylidenchlorid und/oder Dienen, enthält.

2. Verfahren nach Anspruch 1, **dadurch gekennzeichnet, dass** das nicht-copolymerisierbare Co-Tensid ein linearer oder verzweigter aliphatischer C₂ bis C₈ Alkohol ist, wobei sich die Alkohole vorzugsweise von Butanol oder Pentanol herleiten.

3. Verfahren nach Anspruch 1, **dadurch gekennzeichnet, dass** das copolymerisierbare Surfactant ein Hydroxyalkylacrylat oder Hydroxyalkylmethacrylat mit C₂ bis C₈, vorzugsweise Hydroxypropylmethacrylat ist.

4. Verfahren nach einem der Ansprüche 1 bis 3, **dadurch gekennzeichnet, dass** das Co-Tensid zu der Emulsion hinzugefügt wird, bis man eine stabile und durchscheinende direkte Emulsion erhält,

5. Verfahren nach einem der Ansprüche 1 bis 4, **dadurch gekennzeichnet, dass** das oder die Monomere(n), die in der Anfangsemulsion enthalten sind, ausgewählt werden zur Erzielung von Polymer-Nanopartikeln, die Gruppen enthalten, die sich von der Homopolymerisation oder Copolymerisation von Styrol, Acrylsäure, einem Acrylester vom Typ Acrylester von N-Hydroxysuccinimid, wie N-Acryloyloxysuccinimid und N-Acryloyloxyphthalimid, Methacrylsäure, Monobenzylmaleat, 2-Vinylpyyridin, Styrolmethylsulfonat, Chlormethylstyrol, Hydroxyethylacrylat, Hydroxypropylmethacrylat, Hydroxybutylacrylat, Acrylnitril und/oder Acrolein herleiten.

6. Verfahren nach einem der Ansprüche 1 bis 5, **dadurch gekennzeichnet, dass** die Polymerisation der direkten Mikroemulsion photochemisch, chemisch oder thermisch mit Hilfe eines wasserlöslichen oder geeignet organolöslichen Initiators durchgeführt wird.

7. Verfahren nach Anspruch 6, **dadurch gekennzeichnet, dass** der Initiator vorzugsweise ein Redoxpaar vom Typ Persulfat/Diamin, Wasserstoffperoxid/Ascorbinsäure, AIBN oder eines von dessen wasserlöslichen Derivaten ist.

8. Verfahren nach einem der Ansprüche 1 bis 7, **dadurch gekennzeichnet, dass** man eine wässrige Dispersion von Nanopartikeln herstellt, die einen Gehalt an Emulgiermitteln von unter etwa 3 % aufweist.

9. Verfahren nach einem der Ansprüche 1 bis 8, **dadurch gekennzeichnet, dass** die wässrige Dispersion von Nanopartikeln nach ihrer Gewinnung einer Reinigung unterzogen wird.

## Claims

1. Process for the preparation of an aqueous dispersion of polymer nanoparticles containing from 1 to 25% of its weight as nanoparticles, expressed on a dry basis of the polymer constituting the said particles, the said polymer nanoparticles having a narrow particle size distribution and a size of between 10 and 50 nanometres and having, at their surfaces, identical or different ionogenic or reactive groups chosen from OH, SO₃H, SO₃R, SO₄R, COOH, CHO, PhCH₂Cl, NH₂, NR₂, NR₃, with R being a C₁ to C₃ alkyl radical, CONH₂, NH-NH₂, CN, CO₂(CH₂)ₙOH, with n representing an integer between 1 and 8, and N-hydroxyimide esters, **characterized in that** it uses the polymerization of a direct microemulsion of oil-in-water type and the recovery of the aqueous dispersion resulting from the polymerization, the said direct microemulsion of oil-in-water type being obtained beforehand by titration, using an effective amount of a copolymerizable or non-copolymerizable cosurfactant, of a direct emulsion of oil-in-water type which contains, in aqueous dispersion, one or more monomers of vinyl, acrylic or vinylaromatic type, in particular vinyl esters, alkyl esters of α,β-unsaturated acids, esters of unsaturated carboxylic acids, vinyl chloride, vinylidene chloride and/or dienes.

2. Process according to Claim 1, **characterized in that** the non-copolymerizable cosurfactant is a linear or branched C₂ to C₈ aliphatic alcohol, preferably the alcohols derived from butanol or pentanol.

3. Process according to Claim 1, **characterized in that** the copolymerizable cosurfactant is a C₂ to C₈ hydroxyalkyl acrylate or hydroxyalkyl methacrylate, preferably hydroxypropyl methacrylate.

4. Process according to one of Claims 1 to 3, **characterized in that** the cosurfactant is added to the emulsion until a stable and translucent direct microemulsion is obtained.

5. Process according to one of Claims 1 to 4, **characterized in that** the monomer(s) present in the starting emulsion are chosen in order to obtain nanoparticles formed of polymers containing units derived from the homopolymerization or copolymerization of styrene, acrylic acid, an acrylic ester of acrylic ester of N-hydroxysuccinimide type such as N-acryloyloxysuccinimide and N-acryloyloxyphthalimide, methacrylic acid, monobenzyl maleate, 2-vinylpyridine, styrene methylsulphonate, chloromethylstyrene, hydroxyethyl acrylate, hydroxypropyl methacrylate, hydroxybutyl acrylate, acrylonitrile and/or acrolein.

6. Process according to one of Claims 1 to 5, **characterized in that** the polymerization of the direct microemulsion is carried out photochemically, chemically or thermally using a suitable water-soluble or organo-soluble initiator.

7. Process according to Claim 6, **characterized in that** the initiator is preferably a redox pair of persulphate/diamine or hydrogen peroxide/ascorbic acid type, AIBN or one of the water-soluble derivatives of the latter.

8. Process according to one of Claims 1 to 7, **characterized in that** an aqueous nanoparticle dispersion exhibiting an emulsifying agent level of less than approximately 3% is prepared.

9. Process according to one of Claims 1 to 8, **characterized in that** the aqueous nanoparticle dispersion is subjected, after its recovery, to a purification operation.
